# EUROPÄISCHE PATENTSCHRIFT

(11) **EP 1 759 914 B1**
(45) Veröffentlichungstag und Bekanntmachung des Hinweises auf die Patenterteilung: **07.01.2009**
(21) Anmeldenummer: 06118755.5
(22) Anmeldetag: 10.08.2006
(51) Int. Cl.: B60L 5/20

(54) **Verfahren zur Zustandserfassung eines Stromabnehmers**
Method for monitoring the state of a current collector
Méthode pour déterminer l'état d'un capteur de courant

(30) Priorität: 05.09.2005 DE 102005042087
(43) Veröffentlichungstag der Anmeldung: 07.03.2007
(73) Patentinhaber: SIEMENS AKTIENGESELLSCHAFT, 80333 München (DE)
(72) Erfinder: Bosselmann, Thomas, 91080 Marloffstein (DE); Theune, Nils-Michael, 90522 Oberasbach (DE)

(56) Entgegenhaltungen:
- WO-A-20/05044614
- DE-A1- 10 249 896
- JP-A- 2001 018 692
- JP-A- 2002 328 063

## Beschreibung

Die Erfindung betrifft ein Verfahren zur Zustandserfassung eines mit einer Stromleitung in Kontakt stehenden Stromabnehmers.

Ein derartiges Verfahren ist zum Beispiel aus der DE 102 49 896 A1 bekannt. Beschrieben wird die Messung einer Kontaktkraft zwischen einem Stromabnehmer eines Schienentriebfahrzeugs und einer Stromleitung in Gestalt einer Oberleitung, mittels der dem Schienentriebfahrzeug elektrische Energie zugeführt wird. Der Stromabnehmer ist als Pantograph ausgebildet. Die Messung erfolgt mittels mindestens eines am Stromabnehmer angeordneten Faser-Bragg-Gitter-Sensors, der unter dem Einfluss der Kontaktkraft gedehnt wird, so dass ein in den Faser-Bragg-Gitter-Sensor eingespeistes Lichtsignal aufgrund der mechanischen Dehnung in seinem Wellenlängengehalt verändert wird. Die kontaktkraftbedingte Wellenlängenänderung wird ausgewertet.

Der bei dem bekannten Verfahren erfasste Zustand betrifft ausschließlich die Kontaktkraft zwischen dem Stromabnehmer und der Stromleitung. Andere ebenfalls interessierende Zustandsgrößen des Stromabnehmers und/oder der Stromleitung werden bei dem bekannten Verfahren nicht ermittelt.

In der WO 2005/044 614 A1 wird ein Monitoring-System für Stromabnehmer eines Schienentriebfahrzeugs und eine Oberleitung beschrieben. Es kommen Faser-Bragg-Gitter-Sensoren zum Einsatz. Erfasst werden insbesondere die Temperatur des Stromabnehmers, eine Kontaktkraft zur Oberleitung, zu hohe Vertikalkräfte, eine Kontaktstelle der Oberleitung längs des Stromabnehmers, eine Kraft in Fahrtrichtung und zu hohe Stoßkräfte. Beschrieben wird außerdem eine Erfassung des Abnutzungsgrades mittels mehrerer in unterschiedlichem Abstand von der Kontaktoberfläche innerhalb des Stromabnehmers angeordneten Lichtwellenleiter.

Weiterhin wird in der WO 02/099 375 A1 und der JP 2001 018692 A ein Verfahren zur Ermittlung der Kontaktkraft zwischen einem Stromabnehmer eines Schienentriebfahrzeugs und einer elektrischen Oberleitung beschrieben. Dieses Verfahren basiert auf Dehnungs- und Beschleunigungsmessungen, die an verschiedenen Stellen am Stromabnehmer erfasst werden. Es sind insbesondere drei Beschleunigungssensoren vorgesehen. Zwei dieser Beschleunigungssensoren sind an den beiden Randbereichen angeordnet, wohingegen sich der dritte Beschleunigungssensor in der Mitte des Stromabnehmers befindet.

Aus der JP 2002 328063 A ist ein Verfahren zur Messung der Kontaktkraft zwischen einem Stromabnehmer eines Schienentriebfahrzeugs und einer elektrischen Oberleitung bekannt, bei dem zwei Beschleunigungssensoren in den beiden Randbereichen des Stromabnehmers und eine Dehnungsmessvorrichtung in Verbindung mit einer Feder in der Mitte des Stromabnehmers vorgesehenen sind.

Die Aufgabe der Erfindung besteht deshalb darin, ein Verfahren der eingangs bezeichneten Art anzugeben, das eine verbesserte Zustandserfassung des Stromabnehmers ermöglicht.

Diese Aufgabe wird gelöst durch die Merkmale des unabhängigen Patentanspruchs 1. Bei dem erfindungsgemäßen Verfahren weist der Stromabnehmer in Längsrichtung zwei Randbereiche sowie eine Mittenposition auf und ist mit mindestens drei Dehnungsmessstellen versehen, von denen eine erste im ersten Randbereich, eine zweite im zweiten Randbereich und eine dritte an der Mittenposition angeordnet ist, wobei
a) durch eine aktuelle Kontaktkraft zwischen der Stromleitung und dem Stromabnehmer hervorgerufene mechanische Dehnungen des Stromabnehmers an den jeweiligen Dehnungsmessstellen erfasst werden,
b) die aktuelle Kontaktkraft aus der im ersten oder zweiten Randbereich erfassten ersten bzw. zweiten mechanischen Dehnung bestimmt wird, wenn die erste und die zweite mechanische Dehnung gleich groß sind, und
c) aus der so bestimmten aktuellen Kontaktkraft und der an der Mittenposition erfassten dritten mechanischen Dehnung eine aktuelle Abnutzung eines Schleifelements des Stromabnehmers ermittelt wird.

Das erfindungsgemäße Verfahren ermöglicht also neben einer Erfassung der Kontaktkraft auch die Bestimmung der aktuellen Abnutzung eines Schleifelements des Stromabnehmers. Diese zusätzliche Zustandsinformation kann mit keinem der bekannten Verfahren gewonnen werden. So werden die Schleifelemente der Stromabnehmer eines Schienentriebfahrzeugs bislang unabhängig von ihrem aktuellen Abnutzungsgrad nach einer bestimmten Betriebsdauer, die sich beispielsweise nach der Laufleistung bemisst, ausgetauscht. Erst beim Austausch lässt sich der tatsächliche Abnutzungsgrad feststellen. Das erfindungsgemäße Verfahren ermöglicht dies dagegen auch während des normalen Betriebs. Der Abnutzungsgrad lässt sich insbesondere anhand einer verbleibenden Restdicke des Schleifelements bestimmen.

Vorteilhafte Ausgestaltungen des erfindungsgemäßen Verfahrens ergeben sich aus den Merkmalen der von Anspruch 1 abhängigen Ansprüche.

Günstig ist eine Variante, bei der die mechanische Dehnung an jeder der Dehnungsmessstellen jeweils mittels mindestens eines Faser-Bragg-Gitter-Sensors erfasst wird. Dieser Sensortyp eignet sich sehr gut zu einem Einsatz bei widrigen Umgebungsbedingungen. Günstig ist außerdem die inhärente galvanische Trennung, die diese Sensoren aufgrund des optischen Funktionsprinzips bieten. Deshalb sind sie besonders gut geeignet, wenn sich die Messstellen - wie bei einem Stromabnehmer eines Schienentriebfahrzeugs - auf einem hohen elektrischen Potential befinden.

Weiterhin ist es vorzugsweise möglich, dass an der Mittenposition zwei Faser-Bragg-Gitter-Sensoren mit voneinander verschiedener, insbesondere zueinander senkrechter Wirkrichtung angeordnet sind, und neben der dritten mechanischen Dehnung eine weitere mechanische Dehnung erfasst wird. Dadurch ist eine besonders hohe Erfassungsgenauigkeit möglich. Insbesondere lässt sich auf diese Weise ein Kraftvektor der Kontaktkraft mit seinen verschiedenen Richtungskomponenten ermitteln. Außerdem können Störeinflüsse, die auf einer lokalen Beschädigung der Stromleitung beruhen und für die Ermittlung der Kontaktkraft und/oder der Abnutzung unerheblich sind, so erkannt und bei der Auswertung ausgeblendet werden.

Gemäß einer anderen günstigen Variante ist es vorgesehen, dass die Bestimmung der aktuellen Kontaktkraft anhand eines linearen Zusammenhangs zwischen der ersten oder zweiten mechanischen Dehnung und der Kontaktkraft erfolgt. Dies erlaubt eine besonders einfache Ermittlung der Kontaktkraft.

Bevorzugt ist es außerdem, dass vorab eine Kurvenschar für den Zusammenhang zwischen der dritten mechanischen Dehnung und der Abnutzung mit der Kontaktkraft als Scharparameter bestimmt wird und die Ermittlung der aktuellen Abnutzung anhand der vorab bestimmten Kurvenschar erfolgt. Eine derartige Kurvenschar kann ohne weiteres in einer Auswerteeinheit hinterlegt werden. Die Bestimmung der aktuellen Abnutzung erfordert dann keine aufwändige Berechnung und lässt sich sehr schnell, insbesondere in Echtzeit durchführen.

Bei einer weiteren vorteilhaften Ausgestaltung wird ein genauerer Wert für die Kontaktkraft anhand der ermittelten aktuellen Abnutzung bestimmt. Der erkannte Abnutzungsgrad wird dann zur Erhöhung der Erfassungsgenauigkeit für die Kontaktkraft verwendet. Bei einem Außerachtlassen des Abnutzungsgrads kann es nämlich zum Teil zu Ergebnisverfälschungen bei der erfassten Kontaktkraft kommen.

Ähnlich günstig ist eine weitere Variante, bei der eine Kontaktstelle zwischen dem Stromabnehmer und der Stromleitung in Längsrichtung des Stromabnehmers variiert, und eine aktuelle Position der Kontaktstelle unter Berücksichtigung der ermittelten aktuellen Abnutzung bestimmt wird. Auch die Position der Kontaktstelle lässt sich erheblich genauer bestimmen, wenn der Abnutzungsgrad mit berücksichtigt wird.

Gemäß einer anderen günstigen Variante ist es vorgesehen, dass ein Hinweis für eine Wartung oder einen Austausch des Stromabnehmers erzeugt wird, wenn die ermittelte aktuelle Abnutzung einen vorgebbaren Grenzwert überschreitet. Dem steht es insbesondere gleich, wenn die restdicke des Schleifelements einen vorgebbaren Grenzwert unterschreitet. Aufgrund des Warnhinweises kann die Wartung oder der Austausch bedarfsorientiert vorgenommen werden. Dies hilft, die Wartungszyklen zu verlängern oder einen drohenden Fehler rechtzeitig vor seinem Auftreten zu erkennen und zu beseitigen.

Weitere Merkmale, Vorteile und Einzelheiten der Erfindung ergeben sich aus der nachfolgenden Beschreibung von Ausführungsbeispielen anhand der Zeichnung. Es zeigt:
- FIG 1: ein Ausführungsbeispiel einer Einrichtung zur Zustandserfassung eines Stromabnehmers eines Schienentriebfahrzeugs,
- FIG 2: eine vergrößerte Teilseitenansicht einer ein Schleifelement umfassenden Schleifleiste des Stromabnehmers gemäß FIG 1,
- FIG 3: die Schleifleiste mit eingesetztem Schleifelement gemäß FIG 2 in einer Querschnittsdarstellung,
- FIG 4: die Schleifleiste gemäß FIG 2 und 3 mit drei Dehnungsmessstellen in einer schematisierten Seitenansicht,
- FIG 5: ein Diagramm mit einem Dickenverlauf des Schleifelements gemäß FIG 2 und 3 in einem neuen und in einem abgenutzten Zustand,
- FIG 6: ein Diagramm mit Dehnungsverläufen in Längsrichtung der Schleifleiste bei verschiedenem Abnutzungsgrad des Schleifelements gemäß FIG 2 und 3,
- FIG 7: ein Diagramm mit einem linearen Zusammenhang zwischen der Kontaktkraft und der in einem Randbereich der Schleifleiste gemäß FIG 2 bis 4 erfassten Dehnung bei mittiger Kontaktierung, und
- FIG 8: ein Diagramm mit einer Kurvenschar für den Zusammenhang zwischen dem Abnutzungsgrad und der an der Mittenposition der Schleifleiste gemäß FIG 2 bis 4 erfassten Dehnung bei mittiger Kontaktierung und mit der Kontaktkraft als Scharparameter.

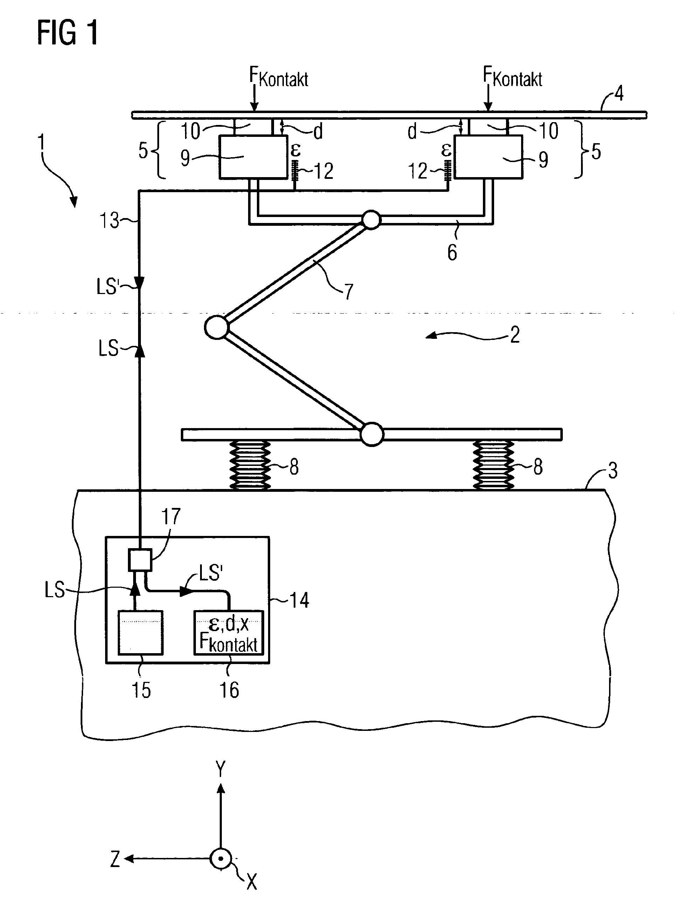

Einander entsprechende Teile sind in FIG 1 bis 8 mit denselben Bezugszeichen versehen.

In FIG 1 ist ein Ausführungsbeispiel einer Einrichtung 1 zur Zustandserfassung eines Stromabnehmers 2 eines nur ausschnittsweise und schematisiert gezeigten Schienentriebfahrzeugs 3 dargestellt. Der Stromabnehmer 2 stellt eine elektrisch leitende Verbindung zwischen dem Schienentriebfahrzeug 3 und einer Stromleitung 4 her. Im Betrieb bewegt sich das Schienentriebfahrzeug 3 in z-Richtung. Die hierfür erforderliche Energie wird dem Schienentriebfahrzeug 3 mittels der Stromleitung 4 zugeführt.

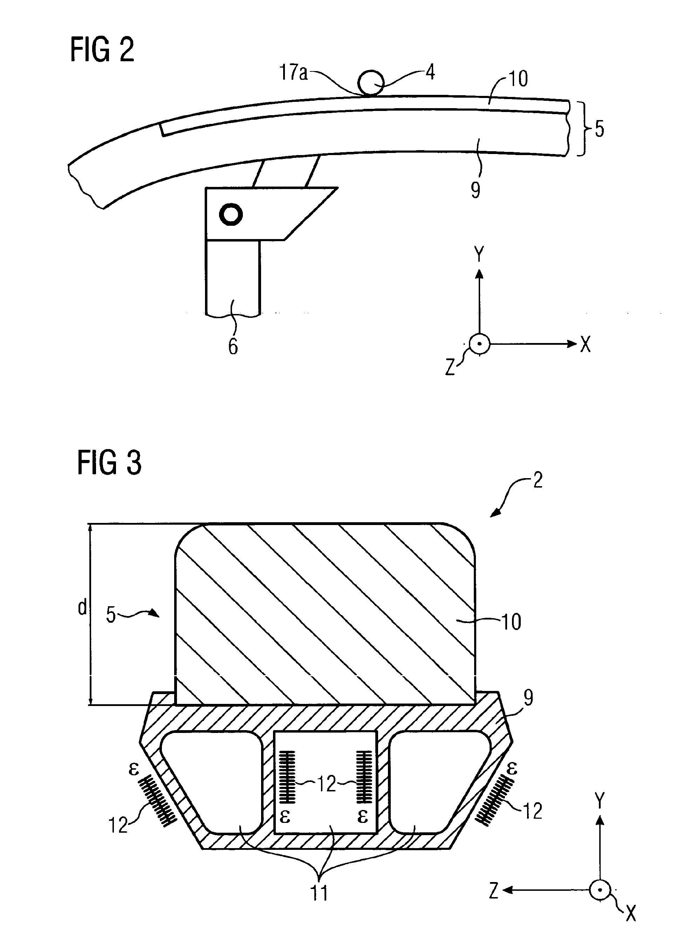

Der an sich bekannte Stromabnehmer 2 umfasst im Wesentlichen eine Schleifleiste 5, ein die Schleifleiste 5 tragendes Haltegestell 6, eine Wippe 7 sowie elektrische Isolatoren 8, die die zuvor genannten Komponenten des Stromabnehmers 2 gegenüber dem Schienentriebfahrzeug 3 elektrisch isolieren. Die Schleifleiste 5 enthält einen Grundkörper 9 und ein Schleifelement 10. In FIG 2 und FIG 3 ist der Stromabnehmer 2 ausschnittsweise und vergrößert in einer Seitenansicht bzw. einem Querschnitt dargestellt. Wie aus FIG 3 hervorgeht, ist der beispielsweise aus Aluminium gefertigte Grundkörper 9 als ein Trägerprofil mit Hohlräumen 11 ausgebildet. Das in den Grundkörper 9 eingesetzte Schleifelement 10 ist eine Karbon-Leiste.

Gemäß FIG 1 und 3 sind optisch abfragbare Faser-Bragg-Gitter-Sensoren 12 am Grundkörper 9 angeordnet. Sie können an verschiedenen Stellen, insbesondere in dem Hohlraum 11 des Grundkörpers 9, platziert sein. Außerdem ist es auch möglich, am Stromabnehmer 2 ein figürlich nicht näher dargestelltes zusätzliches Dehnungselement für die Faser-Bragg-Gitter-Sensoren 12 vorzusehen. Unabhängig von der Art und Weise ihrer Anordnung am Stromabnehmer 2 dienen die Faser-Bragg-Gitter-Sensoren 12 der Erfassung einer mechanischen Dehnung ε, die durch eine Kontaktkraft Fₖₒₙₜₐₖₜ zwischen dem Stromabnehmer 2 und der Stromleitung 4 hervorgerufen wird.

Die Faser-Bragg-Gitter-Sensoren 12 sind mittels mindestens eines Lichtwellenleiters 13 mit einer Sende-/Empfangseinheit 14 verbunden. Letztere umfasst eine Lichtquelle 15 sowie eine Auswerteeinheit 16, die mittels eines Kopplers 17 an den oder die Lichtwellenleiter 13 angeschlossen sind. Die Lichtquelle 15 ist beispielsweise als Laser ausgeführt. Die Auswerteeinheit 16 umfasst einen in der Faser-Bragg-Sensorik üblichen optischen Detektor, wie z. B. einen Polychromator mit CCD- oder Fotodioden-Zeile.

Im Folgenden wird die Funktionsweise der Einrichtung 1 zur Zustandsüberwachung des Stromabnehmers 2 näher erläutert.

Wie bereits erwähnt, dienen die Faser-Bragg-Gitter-Sensoren 12 einer Dehnungserfassung. Ein von der Lichtquelle 15 erzeugtes Lichtsignal LS wird über den Kopplern 17 in den Lichtwellenleiter 13 eingespeist und zu den Messstellen, an denen sich die Faser-Bragg-Gitter-Sensoren 12 befinden, geführt. Dabei bietet die optische Übertragungsstrecke mittels des Lichtwellenleiters 13 eine galvanische Trennung und elektrische Isolation der auf einem Hochspannungspotential, nämlich im Wesentlichen auf dem Potential der Stromleitung 4, angeordneten Faser-Bragg-Gitter-Sensoren 12.

Das Lichtsignal LS weist einen vorbestimmten Wellenlängenhalt, also eine vorbestimmte spektrale Bandbreite auf. Die Faser-Bragg-Gitter-Sensoren 12 haben jeweils sensorspezifische Bragg-Schwerpunktwellenlängen, die alle innerhalb der spektralen Bandbreite des Lichtsignals LS liegen. Von dem eintreffenden Lichtsignal LS reflektiert die Faser-Bragg-Gitter-Sensoren 12 einen Lichtanteil mit einer Wellenlänge entsprechend der jeweiligen sensorspezifischen Bragg-Schwerpunktwellenlänge zurück. Die Bragg-Schwerpunktwellenlängen sind messgrößenabhängig, d. h. sie verändern ihren spektrale Lage in Abhängigkeit von der aktuellen mechanischen Dehnung ε des jeweiligen Faser-Bragg-Gitter-Sensors 12. Die mechanischen Dehnungen ε an den verschiedenen Messstellen hängen ihrerseits maßgeblich von der eigentlich interessierenden Kontaktkraft Fₖₒₙₜₐₖₜ zwischen dem Stromabnehmer 2 und der Stromleitung 4 ab.

Der an den Faser-Bragg-Gitter-Sensoren 12 reflektierte Lichtanteil mit messgrößenabhängigem Wellenlängengehalt läuft als ein Antwort-Lichtsignal LS' im Lichtwellenleiter 13 zurück zur Sende-/Empfangseinheit 14. Er gelangt dort über den Koppler 17 zur Auswerteeinheit 16, in der sein Wellenlängengehalt analysiert wird, um Messwerte für die mechanischen Dehnungen ε an den verschiedenen Messstellen und für die ursächliche Kontaktkraft Fₖₒₙₜₐₖₜ zu bestimmen.

Die Auswerteeinheit 16 ist darüber hinaus auch dazu ausgelegt, eine aktuelle Abnutzung des Schleifelements 10 zu ermitteln, wobei als Maß für die Abnutzung eine (Rest-)Dicke d des Schleifelements 10 dient. Weiterhin wird in der Auswerteeinheit 16 die x-Position einer Kontaktstelle 17a zwischen der Schleifleiste 5 und der Stromleitung 4 bestimmt. Die Einrichtung 1 dient also zur umfassenden Zustandsüberwachung des Stromabnehmers 2.

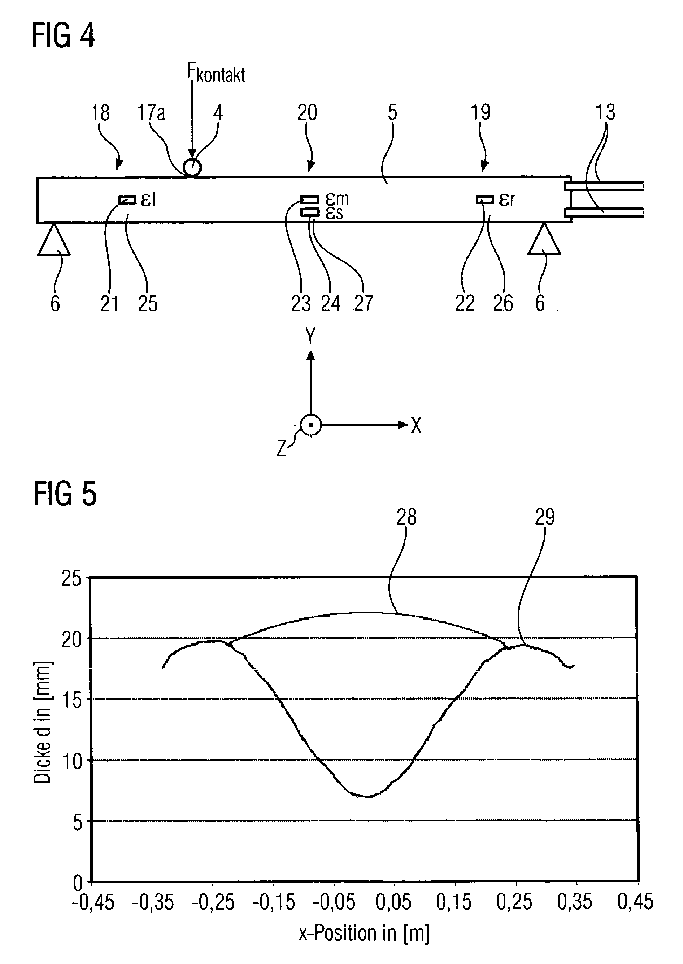

Anhand von FIG 4 wird die in Längsrichtung der Schleifleiste 5, also in x-Richtung, verteilte Anordnung von mehreren der Faser-Bragg-Gitter-Sensoren 12 näher erläutert. Die Schleifleiste 5 weist in ihrer Längsrichtung einen ersten Randbereich 18 auf, der im Folgenden auch als linker Randbereich 18 bezeichnet wird. Am vom linken Randbereich 18 abgewandten Ende der Schleifleiste 5 ist ein zweiter Randbereich 19, der dementsprechend im Folgenden auch als rechter Randbereich 19 bezeichnet wird, vorgesehen. Weiterhin hat die Schleifleiste 5 eine Mittenposition 20 in x-Richtung.

Im linken Randbereich 18 ist ein linker Faser-Bragg-Gitter-Sensor 21, im rechten Randbereich 19 ein rechter Faser-Bragg-Gitter-Sensor 22 und an der Mittenposition 20 ein mittlerer Faser-Bragg-Gitter-Sensor 23 sowie optional ein zusätzlicher Faser-Bragg-Gitter-Sensor 24 angeordnet. Damit ist eine linke Dehnungsmessstelle 25 zur Erfassung einer linken mechanischen Dehnung εl, eine rechte Dehnungsmessstelle 26 zur Erfassung einer rechten mechanischen Dehnung εr sowie eine mittlere Dehnungsmessstelle 27 zur Erfassung einer mittleren mechanischen Dehnung εm und optional einer senkrechten mechanischen Dehnung εs gebildet.

Eine Wirkungsrichtung des zusätzlichen Faser-Blagg-Gitter-Sensors 24 ist senkrecht zu der des mittleren Faser-Bragg-Gitter-Sensors 23, so dass eine Dehnungsmessung in z-Richtung (=Fahrtrichtung des Schienentriebfahrzeugs 3) und in x-Richtung (= Längsrichtung der Schleifleiste 5) möglich ist. Dadurch wird die Erfassungsgenauigkeit verbessert. Lokale Beschädigungen an der Stromleitung 4 können nämlich zu einer sehr hohen, kurzfristigen Krafteinwirkung in z-Richtung führen, die die Messergebnisse verfälschen kann, wenn derartige Sondereinflüsse nicht mittels des zusätzlichen Faser-Bragg-Gitter-Sensors 24 gesondert erfasst und in der Auswerteeinheit 16 entsprechend berücksichtigt werden.

Im Ausführungsbeispiel erstreckt sich das Schleifelement 10 ausgehend von der Mittenposition 20 etwa 25 cm in Richtung der beiden Randbereiche 18 und 19. In x-Richtung ist das Schleifelement 10 also insgesamt etwa 50 cm lang. In y-Richtung weist das Schleifelement 10 im neuen Zustand eine Dicke d von etwa 22 mm auf.

Durch den Kontakt mit der Stromleitung 4 wird das Schleifelement 10 während des Betriebs abgerieben, wobei der Materialabtrag in Längsrichtung ungleichmäßig erfolgt. Er ist an der Mittenposition 20 am größten und nimmt zu den Randbereichen 18 und 19 hin näherungsweise mit einem parabolischen Verlauf ab. In FIG 5 ist der Dickenverlauf in x-Richtung für den neuen und einen abgenutzten Zustand des Schleifelements 10 gegenübergestellt. Der neue Zustand ist mit dem Bezugszeichen 28 und der abgenutzte Zustand mit dem Bezugszeichen 29 bezeichnet.

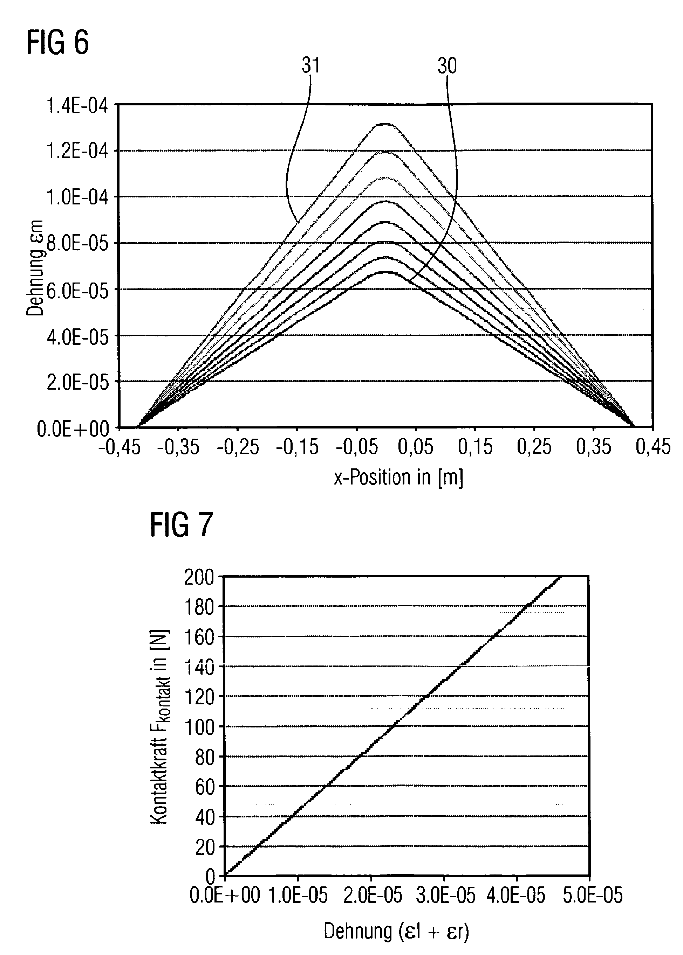

Die Dehnungsmessung an der linken und rechten Dehnungsmessstelle 25 und 26 ist praktisch unabhängig vom Abnutzungsgrad des Schleifelements 10. Dagegen beeinflusst der Abnutzungsgrad die Dehnungsmessung an der mittleren Dehnungsmessstelle 27, wie aus dem Diagramm gemäß FIG 6 ersichtlich, in erheblichem Umfang. Für verschiedene Abnutzungsgrade ist in FIG 6 die an der mittleren Dehnungsstelle 27 erfasste mechanische Dehnung εm über der x-Position der Kontaktstelle 17a, also bei Einwirken der Kontaktkraft Fₖₒₙₜₐₖₜ an verschiedenen Stellen in Längsrichtung der Schleifleiste 5, aufgetragen. Die Kurve für ein neues, also 22 mm dickes Schleifelement 10 ist mit dem Bezugszeichen 30 bezeichnet. Gemäß den Betreibervorgaben ist das Schleifelement 10 ab einer (Rest-)Dicke d von 8 mm nicht mehr funktionstüchtig und deshalb auszutauschen. Die zu dieser minimal zulässigen Dicke d gehörige Kurve ist in FIG 6 mit dem Bezugszeichen 31 bezeichnet. Die außerdem eingetragenen Kurven betreffen (Rest-)Dicken d, die zwischen den beiden genannten Extremwerten liegen.

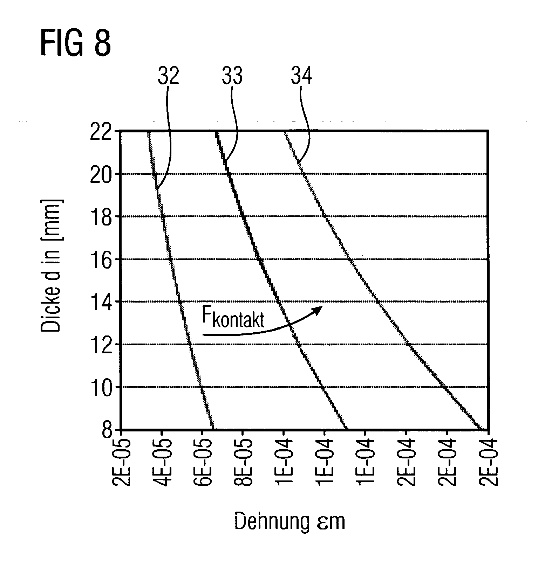

In der Auswerteeinheit 16 wird aus den drei erfassten mechanischen Dehnungen εl, εr und εm die (Rest-)Dicke d des Schleifelements 10 ermittelt. Im Folgenden wird das hierzu eingesetzte Verfahren anhand von FIG 7 und 8 näher beschrieben.

Zunächst wird überprüft, ob sich die Kontaktstelle 17a an der Mittenposition 20 befindet. In der Darstellung gemäß FIG 4 ist dies nicht erfüllt. Die Stromleitung 4 kontaktiert die Schleifleiste 5 außermittig. Bei einer mittigen Kontaktierung sind die linke mechanische Dehnung εl und die rechte mechanische Dehnung εr und damit auch die aus diesen beiden mechanischen Dehnungen εl bzw. εr abgeleiteten Kräfte gleich groß. Die Kontaktkraft Fₖₒₙₜₐₖₜ errechnet sich aus dem arithmetischen Mittelwert der beiden aus den mechanischen Dehnungen εl bzw. εr abgeleiteten Kräfte. Bei einer mittigen Kontaktierung sind diese beiden Kräfte gleich groß und außerdem auch gleich der gesuchten Kontaktkraft Fₖₒₙₜₐₖₜ.

Anhand der mechanischen Dehnungen εl und εr kann die Kontaktkraft Fₖₒₙₜₐₖₜ unabhängig vom Abnutzungsgrad ermittelt werden, da der Abnutzungsgrad bei den Messungen an der linken und rechten Dehnungsmessstelle 25 bzw. 26, wie bereits erwähnt, keine maßgebliche Rolle spielt. Dies gilt natürlich auch bei einer mittigen Kontaktierung der Schleifleiste 5 durch die Stromleitung 4.

Ergibt die Überprüfung in der Auswerteeinheit 16 also gleich große Werte für die linke und rechte mechanische Dehnung εl bzw. εr, wird aus der Summe dieser beiden mechanischen Dehnungen εl und εr die Kontaktkraft Fₖₒₙₜₐₖₜ ermittelt. Hierbei liegt der in FIG 7 dargestellte lineare und vom Abnutzungsgrad des Schleifelements 10 unabhängige Zusammenhang zugrunde.

Die mittlere mechanische Dehnung εm ist gemäß FIG 6 abhängig vom Abnutzungsgrad. Es lässt sich die in FIG 8 gezeigte Kurvenschar angeben, bei der die Dicke d des Schleifelements 10 über der mittig erfassten mechanischen Dehnung εm mit der Kontaktkraft Fₖₒₙₜₐₖₜ als Scharparameter aufgetragen ist. Es sind drei Scharkurven 32, 33 und 34 für eine Kontaktkraft Fₖₒₙₜₐₖₜ mit einem Wert von 50 N, 100 N bzw. 150 N dargestellt. Weitere Scharkurven lassen sich für andere Werte der Kontaktkraft Fₖₒₙₜₐₖₜ angeben. Auch der Kurvenschar gemäß FIG 8 liegt eine mittige Kontaktierung der Schleifleiste 5 durch die Stromleitung 4 zugrunde.

Aus der Kurvenschar gemäß FIG 8 wird die zu der gemäß FIG 7 bestimmten Kontaktkraft Fₖₒₙₜₐₖₜ gehörige Scharkurve ausgewählt. Anhand der erfassten mittleren mechanischen Dehnung εm lässt sich dann die aktuelle (Rest-)Dicke d und damit der aktuelle Abnutzungsgrad des Schleifelements 10 über den eindeutigen Zusammenhang der ausgewählten Scharkurve bestimmen.

Die Kurvenschar gemäß FIG 8 wird vorab ermittelt und beispielsweise als Zuordnungstabelle in der Auswerteeinheit 16 hinterlegt. Alternativ kann auch ein funktionaler Zusammenhang, der die Kurvenschar gemäß FIG 8 mathematisch beschreibt, in der Auswerteeinheit 16 zur Ermittlung der (Rest-)Dicke d verwendet werden. Gleiches gilt für den Zusammenhang zwischen der linken oder rechten mechanischen Dehnung εl bzw. εr und der Kontaktkraft Fₖₒₙₜₐₖₜ gemäß FIG 7.

Mittels des beschriebenen Verfahrens lässt sich der Abnutzungsgrad des Schleifelements 10 vorteilhafterweise auch während des Betriebs des Schienentriebfahrzeugs 3 ermitteln. Diese nützliche Information über den Zustand des Stromabnehmers 2 kann auf verschiedene Weise weiter verwendet werden. Zum einen ist ein Hinweis an das Betriebspersonal möglich, wenn die (Rest-)Dicke d des Schleifelements 10 eine gerade noch zulässige untere Grenze erreicht, die im Ausführungsbeispiel bei 8 mm liegt. Dann kann eine bedarfsgesteuerte Wartung oder/und ein Austausch des Schleifelements 10 vorgenommen werden.

Weiterhin ist es möglich, den Abnutzungsgrad zu einer genaueren Bestimmung der Kontaktkraft Fₖₒₙₜₐₖₜ zu verwenden. Dies kommt vorzugsweise dann zum Tragen, wenn die Kontaktkraft Fₖₒₙₜₐₖₜ auch unter Verwendung der mittleren mechanischen Dehnung εm ermittelt wird. Unter Berücksichtigung des aktuellen Abnutzungsgrads ergeben sich dann deutlich verbesserte Resultate für die ermittelte Kontaktkraft Fₖₒₙₜₐₖₜ.

Gleiches gilt für die Bestimmung der x-Position der Kontaktstelle 17a. Auch hier führt die Berücksichtigung des aktuellen Abnutzungsgrads des Schleifelements 10 zu erheblich genaueren Ergebnissen.

## Patentansprüche

1. Verfahren zur Zustandserfassung eines mit einer Stromleitung (4) in Kontakt stehenden Stromabnehmers (2), der in Längsrichtung zwei Randbereiche (18, 19) sowie eine Mittenposition (20) aufweist und mit mindestens drei Dehnungsmessstellen (25, 26, 27) versehen ist, von denen eine erste im ersten Randbereich (18), eine zweite im zweiten Randbereich (19) und eine dritte an der Mittenposition (20) angeordnet ist, wobei
a) durch eine aktuelle Kontaktkraft (Fₖₒₙₜₐₖₜ) zwischen der Stromleitung (4) und dem Stromabnehmer (2) hervorgerufene mechanische Dehnungen (εl, εr, εm, εs) des Stromabnehmers (2) an den jeweiligen Dehnungsmessstellen (25, 26, 27) erfasst werden,
**dadurch gekennzeichnet, dass**
b) die aktuelle Kontaktkraft (Fₖₒₙₜₐₖₜ) aus der im ersten oder zweiten Randbereich (18, 19) erfassten ersten bzw. zweiten mechanischen Dehnung (εl, εr) bestimmt wird, wenn die erste und die zweite mechanische Dehnung (εl, εr) gleich groß sind, und
c) aus der so bestimmten aktuellen Kontaktkraft (Fₖₒₙₜₐₖₜ) und der an der Mittenposition (20) erfassten dritten mechanischen Dehnung (εm) eine aktuelle Abnutzung (d) eines Schleifelements (10) des Stromabnehmers (2) ermittelt wird.

2. Verfahren nach Anspruch 1, **dadurch gekennzeichnet, dass** die mechanische Dehnung (εl, εr, εm, εs) an jeder der Dehnungsmessstellen (25, 26, 27) jeweils mittels mindestens eines Faser-Bragg-Gitter-Sensors (12; 21 - 24) erfasst wird.

3. Verfahren nach Anspruch 1, **dadurch gekennzeichnet, dass** an der Mittenposition (20) zwei Faser-Bragg-Gitter-Sensoren (23, 24) mit voneinander verschiedener, insbesondere zueinander senkrechter Wirkrichtung angeordnet sind, und neben der dritten mechanischen Dehnung (εm) eine weitere mechanische Dehnung (εs) erfasst wird.

4. Verfahren nach Anspruch 1, **dadurch gekennzeichnet, dass** die Bestimmung der aktuellen Kontaktkraft (Fₖₒₙₜₐₖₜ) anhand eines linearen Zusammenhangs zwischen der ersten oder zweiten mechanischen Dehnung (εl, εr) und der Kontaktkraft (Fₖₒₙₜₐₖₜ) erfolgt.

5. Verfahren nach Anspruch 1, **dadurch gekennzeichnet, dass** vorab eine Kurvenschar für den Zusammenhang zwischen der dritten mechanischen Dehnung (εm) und der Abnutzung (d) mit der Kontaktkraft (Fₖₒₙₜₐₖₜ) als Scharparameter bestimmt wird und die Ermittlung der aktuellen Abnutzung (d) anhand der vorab bestimmten Kurvenschar erfolgt.

6. Verfahren nach Anspruch 1, **dadurch gekennzeichnet, dass** anhand der ermittelten aktuellen Abnutzung (d) ein genauerer Wert für die Kontaktkraft (Fₖₒₙₜₐₖₜ) bestimmt wird.

7. Verfahren nach Anspruch 1, **dadurch gekennzeichnet, dass** eine Kontaktstelle (17a) zwischen dem Stromabnehmer (2) und der Stromleitung (4) in Längsrichtung des Stromabnehmers (2) variiert, und eine aktuelle Position der Kontaktstelle (17a) unter Berücksichtigung der ermittelten aktuellen Abnutzung (d) bestimmt wird.

8. Verfahren nach Anspruch 1, **dadurch gekennzeichnet, dass** ein Hinweis für eine Wartung des Stromabnehmers (2) oder für einen Austausch des Schleifelements (10) erzeugt wird, wenn die ermittelte aktuelle Abnutzung (d) einen vorgebbaren Grenzwert überschreitet.

## Claims

1. Method for state detection of an electrical pick-up (2) which makes contact with an electrical power line (4), has two edge areas (18, 19) and a centre position (20) in the longitudinal direction and is provided with at least three strain measurement points (25, 26, 27), a first of which is arranged in the first edge area (18), a second of which is arranged in the second edge area (19) and a third of which is arranged in the centre position (20), wherein
a) mechanical strains (εl, εr, εm, εs), which are caused by a present contact force (F_{contact}) between the electrical power line (4) and the electrical pick-up (2), of the electrical pick-up (2) are detected at the respective strain measurements points (25, 26, 27),
**characterized in that**
b) the present contact force (F_{contact}) is determined from the respective first and second mechanical strain (εl, εr) detected in the first or the second edge area (18, 19) when the first and the second mechanical strain (εl, εr) are of the same magnitude, and
c) present wear (d) of a sliding element (10) of the electrical pick-up (2) is determined from the present contact force (F_{contact}) determined in this way and from the third mechanical strain (εm) detected at the centre position (20).

2. Method according to Claim 1, **characterized in that** the mechanical strain (εl, εr, εm, εs) is detected in each case by means of at least one fibre Bragg grating sensor (12; 21 - 24) at each of the strain measurement points (25, 26, 27).

3. Method according to Claim 1, **characterized in that** two fibre-Bragg grating sensors (23, 24) are arranged at the centre position (20) with different effect directions from one another, in particular with perpendicular effect directions, and a further mechanical strain (εS) is detected in addition to the third mechanical strain (εm).

4. Method according to Claim 1, **characterized in that** the present contact force (F_{contact}) is determined on the basis of a linear relationship between the first or the second mechanical strain (εl,εr) and the contact force (F_{contact}).

5. Method according to Claim 1, **characterized in that** a family of curves is defined in advance for the relationship between the third mechanical strain (εm) and the wear (d) with the contact force (F_{contact}) as a family parameter, and the present wear (d) is determined on the basis of the previously defined family of curves.

6. Method according to Claim 1, **characterized in that** a more accurate value for the contact force (F_{contact}) is determined on the basis of the determined present wear (d).

7. Method according to Claim 1, **characterized in that** a contact point (17a) between the electrical pick-up (2) and the electrical power line (4) is varied in the longitudinal direction of the electrical pick-up (2), and a present position of the contact point (17a) is determined taking into account the determined present wear (d).

8. Method according to Claim 1, **characterized in that** an indication for servicing of the electrical pick-up (2) or for replacement of the sliding element (10) is produced when the determined present wear (d) exceeds a predeterminable limit value.

## Revendications

1. Procédé de détection de l'état d'un capteur ( 2 ) de courant en contact avec une ligne ( 4 ) de courant, lequel a, dans la direction longitudinale, deux parties ( 18, 19 ) marginales ainsi qu'une position ( 20 ) médiane et munie d'au moins trois points ( 25, 26, 27 ) de mesure de dilatation dont un premier point est disposé dans la première partie ( 18 ) marginale, un deuxième dans la deuxième partie ( 19 ) marginale et un troisième dans la position ( 20 ) médiane, dans lequel
a ) on relève par une force ( F_{contact} ) instantanée de contact des dilatations ( εl, εr, εm, εs ) mécaniques du capteur ( 2 ) de courant provoquées entre la ligne ( 4 ) de courant et le capteur ( 2 ) de courant aux points ( 25, 26, 27 ) respectifs de mesure de dilatation,
**caractérisé en ce que**
b ) on détermine la force ( F_{contact} ) instantanée de contact à partir de la première ou la deuxième dilatation ( εl, εr ) mécanique détectée dans la première ou la deuxième partie ( 18, 19 ) marginale, si la première et la deuxième dilatation ( εl, εr ) mécanique sont égales, et
c ) à partir de la force ( F_{contact} ) de contact instantanée déterminée et de la troisième dilatation ( εm ) mécanique détectée en la position ( 20 ) médiane, on détermine une usure ( d ) instantanée d'un élément ( 10 ) de frottement du capteur ( 2 ) de courant.

2. Procédé suivant la revendication 1, **caractérisé en ce que** l'on détecte la dilatation ( εl, εr, εm, εs ) mécanique en chaque point ( 25, 26, 27 ) de mesure de la dilatation respectivement à l'aide d'au moins un capteur ( 12 ; 21 à 24 ) à réseau de Bragg à fibre.

3. Procédé suivant la revendication 1, **caractérisé en qu'**en la position ( 20 ) médiane on dispose deux capteurs ( 23, 24 ) à réseau de Bragg à fibre ayant des directions efficaces différentes l'une de l'autre, notamment perpendiculaires l'une à l'autre, et on détecte, outre la troisième dilatation ( εm ) mécanique une autre dilatation ( εs ) mécanique.

4. Procédé suivant la revendication 1, **caractérisé en ce que** l'on effectue la détermination de la force ( F_{contact} ) contact instantanée au moyen d'une relation linéaire entre la première ou la deuxième dilatation ( εl, εr ) mécanique et la force ( F_{contact} ) de contact.

5. Procédé suivant la revendication 1, **caractérisé en ce que** l'on détermine au préalable une famille de courbes pour la relation entre la troisième dilatation ( εm ) mécanique et l'usure ( d ) en ayant la force ( F_{contact} ) de contact comme paramètre de la famille et on effectue la détermination de l'usure ( d ) instantanée au moyen de la famille de courbes déterminée au préalable.

6. Procédé suivant la revendication 1, **caractérisé en ce que** l'on détermine une valeur plus précise de la force ( F_{contact} ) de contact au moyen de l'usure ( d ) instantanée déterminée.

7. Procédé suivant la revendication 1, **caractérisé en ce que** l'on fait varier un point ( 17a ) de contact entre le capteur ( 2 ) de courant et la ligne ( 4 ) de courant dans la direction longitudinale du capteur ( 2 ) de courant et l'on détermine une position instantanée du point ( 17a ) de contact en tenant compte de l'usure ( d ) instantanée déterminée.

8. Procédé suivant la revendication 1, **caractérisé en ce qu'**on produit une indication pour un entretien du capteur ( 2 ) de courant ou pour un échange de l'élément ( 10 ) qui frotte, si l'usure ( d ) instantanée déterminée dépasse une valeur limite qui peut être prescrite.
